Europäisches Patentamt

European Patent Office

Office européen des brevets

(11) Veröffentlichungsnummer: **0 366 000 B1**

(19)

# EUROPÄISCHE PATENTSCHRIFT

(12)

(45) Veröffentlichungstag der Patentschrift: **09.03.94**

(21) Anmeldenummer: **89119380.7**

(22) Anmeldetag: **19.10.89**

(51) Int. Cl.⁵: **G11B 19/04**, G11B 5/54

(54) Verfahren und Anordnung zur Vermeidung von auf Verschleiss zurückführbaren Abtastfehlern in einer Magnetspeichereinrichtung.

(30) Priorität: **22.10.88 DE 3836129**
**05.10.89 DE 3933212**

(43) Veröffentlichungstag der Anmeldung:
**02.05.90 Patentblatt 90/18**

(45) Bekanntmachung des Hinweises auf die
Patenterteilung:
**09.03.94 Patentblatt 94/10**

(84) Benannte Vertragsstaaten:
**DE FR GB IT NL**

(56) Entgegenhaltungen:
**EP-A- 0 241 934**
**WO-A-87/01856**
**DE-A- 3 546 067**
**DE-A- 3 742 366**
**GB-A- 2 106 304**

**RESEARCH DISCLOSURE no. 255, Juli 1985,**
**EMSWORTH, GB Seite 372 , Artikel 25554:**
**"ACTUATOR MOTION CONTROL FEATURE"**

**PATENT ABSTRACTS OF JAPAN, Bd. 12, Nr.**
**123 (P-690)(2970) 16.April 1988; & JP-A-62**
**248174**

(73) Patentinhaber: **BASF Akfiengesellschaft**
**Carl-Bosch-Strasse 38**
**D-67063 Ludwigshafen(DE)**

(72) Erfinder: **Hack, Joachim**
**Pfarrer-Friedrich-Strasse 34**
**D-6700 Ludwigshafen(DE)**
Erfinder: **Grau, Werner, Dr.**
**Tuchbleiche 5**
**D-6712 Bobenheim-Roxheim(DE)**
Erfinder: **Sickmüller, Werner**
**Wingertstrasse 12**
**D-6902 Sandhausen(DE)**
Erfinder: **Mannsperger, Heinrich, Dr.**
**Goethestrasse 52**
**D-6915 Dossenheim(DE)**
Erfinder: **Jakusch, Helmut, Dr.**
**Lorscher Ring 6 c**
**D-6710 Frankenthal(DE)**
Erfinder: **Schomann, Klaus Dieter, Dr.**
**Kopernikusstrasse 47**
**D-6700 Ludwigshafen(DE)**
Erfinder: **Hammerschmitt, Peter**
**Elsterweg 1**
**D-6835 Brühl-Rohrhof(DE)**

PATENT ABSTRACTS OF JAPAN, Bd. 8, Nr. 31 (P-253)(1468) 09.Februar 1984; & JP-A-58 185066

PATENT ABSTRACTS OF JAPAN, Bd. 13, Nr. 219 (P-875)(3567) 23.Mai 1989; & JP-A-01 033712

Erfinder: **Brosius, Sibylle, Dr.**
**Cordovastrasse 29**
**D-6700 Ludwigshafen(DE)**
Erfinder: **Feuerherd, Karl-Heinz, Dr.**
**Kesselgraben 16**
**D-6719 Hettenleidelheim(DE)**
Erfinder: **Albert, Bernhard, Dr.**
**Riedburgstrasse 13**
**D-6701 Maxdorf(DE)**
Erfinder: **Schmitt, Michael, Dr.**
**Freudenbergstrasse 18**
**D-6940 Weinheim(DE)**
Erfinder: **Acker, Michael, Dr.**
**Glockenzehnten 45**
**D-6900 Heidelberg(DE)**

**Beschreibung**

Die Erfindung betrifft ein Verfahren und eine Anordnung zur Vermeidung von auf Verschleiß zurückführbaren Abtastfehlern in einer Magnetspeichereinrichtung mit wenigstens einem Magnetkopf und mindestens einer Magnetplatte mit einer Magnetschicht, wobei Schreib- und Lesevorgänge in Kontakt von Magnetkopf und Magnetschicht in letzterer in einer oder mehreren Nutzpuren erfolgen.

Aus dem Dokument "Research Disclosure", nr. 255, Juli 1985, EMSWORT, GB, Seite 372, Artikel 25554: "Actuator Motion Control Feature" ist ein Verfahren und eine Anordnung gemäß den Oberbegriffen der Ansprüche 1 und 5 bekannt.

Magnetplatten, insbesondere FlexyDisks® oder "Disketten" oder Microfloppydisks mit harten oder extrem harten Oberflächen besitzen z.B. Chromdioxidschichten ($CrO_2$) oder Metallschichten (z.B. CoCr). Beim Vorhandensein kleiner Unebenheiten werden durch die ebenfalls sehr harten, aus Ferrit und/oder Keramikteilen bestehenden Magnetköpfen Partikel herausgebrochen. Solche Partikel setzen sich dann häufig in die Klebfugen zwischen den einzelnen Komponenten des Kopfspiegels oder in den Magnetspalt selbst. Diese festgesetzten Partikel zerkratzen ihrerseits die Oberfläche der Magnetplatte oder Diskette, so daß lawinenartig anwachsende Schäden auftreten, die in relativ kurzer Zeit zur Zerstörung von Disketten und Köpfen führen können. Als Abhilfe auf die Platten- oder Diskettenoberfläche aufgebrachte Schutzschichten bewirken nur eine geringe Verbesserung.

Es ist daher Aufgabe der Erfindung, im wesentlichen auf Verschleiß zurückzuführbare Abtastfehler sowie die Lebensdauer der magnetischen Speichermedien verkürzende Schäden zu vermeiden.

Diese Aufgabe wird mit dem Verfahren nach Patentanspruch 1 und der Anordnung nach Patentanspruch 5 gelöst.

Damit wird verhindert, daß Magnetköpfe, die bei bewegten Magnetplatten längere Zeit auf dieselbe Nutzspur positioniert sind, vermeidbare Schäden hervorrufen.

Durch die erfindungsgemäße Maßnahme des Wegpositionierens wird in Magnetplattenspeichern der Kopf zweckmäßig radial über die Platten- bzw. Diskettenoberfläche bewegt, so daß der beschriebene Verschleißvorgang unterbrochen wird und die Verschleiß-Partikel mittels einer vorgesehenen Reinigungsschicht der Diskette (z.B. einem Vlies) oder mittels andersgearteter Reinigungsvorrichtungen bei Magnetplatten entfernt werden, in dem sie vom Kopfspiegel abgestreift werden und sich im Vlies festsetzen, wodurch sie unschädlich werden.

Dadurch läßt sich sowohl die Kopf- und Magnetplatten- und Disketten-Lebensdauer wesentlich erhöhen bis zum Faktor 1.000 oder mehr.

In weiterer Ausgestaltung des erfindungsgemäßen Verfahrens kann das Wegpositionieren der des Magnetkopfes auf einen anderen Bereich der Magnetschicht als den der Nutzspur(en) erfolgen.

In weiterer Ausbildung kann das Weg- und Rückpositionieren wenigstens eine Bewegung des Magnetkopfe über die gesamte Magnetschicht und zurück zur Nutzspur/zu den Nutzspuren umfassen.

Es ist gemäß der Erfindung in einem Magnetspeicher auch möglich, daß das Wegpositionieren eine Bewegung des Magnetkopfes zu einer Nachbarspur/zu den Nachbarspuren umfaßt.

Schließlich kann es für jedes Magnetspeichersystem auch zweckmäßig sein, daß der andere Bereich der Magnetschicht außerhalb des nutzbaren Bereichs der Nutzspuren liegt.

Eine vorteilhafte Anordnung zur Durchführung des erfindungsgemäßen Verfahrens für Magnetspeicher beschreibt der Patentanspruch 5.

Damit wird das erfindungsgemäße Verfahren zur Verschleißminderung in Magnetspeichereinrichtungen realisierbar und innerhalb vorhandener elektronischer Einrichtungen ohne größeren Aufwand einsetzbar, so daß auch ein nachträglicher Einbau möglich ist.

Der Umschalter erzeugt zweckmäßig ein Kennsignal zur Vermeidung von Schreib-/Lesevorgängen für die Dauer der Antiverschleißzeit (oder Ausweichzeit).

Das Verhältnis von Antiverschleißzeit oder Ausweichzeit zur Wartezeit liegt für Magnetspeicher vorteilhaft etwa zwischen 1 : 10 und 1 : 400 oder ist noch kleiner.

Weitere Einzelheiten der Erfindung werden im folgenden anhand eines in einer Zeichnung dargestellten Ausführungsbeispiels einer Schaltungsanordnung erläutert.

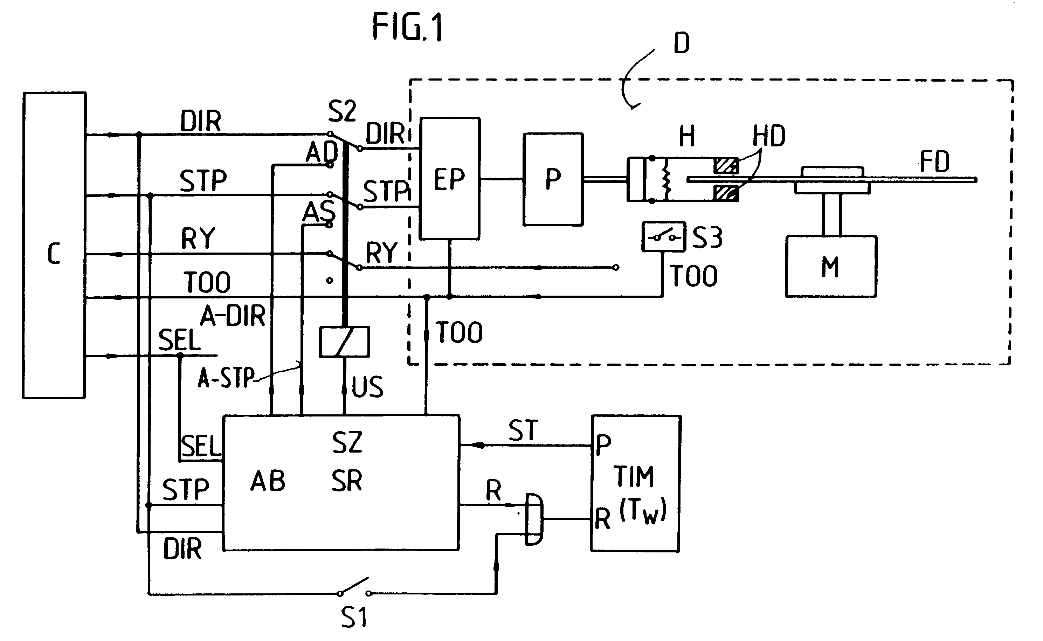

Die Zeichnung zeigt in Figur 1 eine Antiverschleiß-Anordnung nach der Erfindung für eine Magnetspeichereinrichtung im Blockschaltbild.

® ist ein eingetragenes Warenzeichen der BASF Aktiengesellschaft.

Beschreibung der Figur 1:

Zunächst werden die Funktionsgruppen und Signale beschrieben, die bei einem handelsüblichen FlexyDisk-Laufwerk D bereits vorhanden sind:

Die Diskette oder FlexyDisk FD wird durch den Spindelmotor M in Rotation versetzt.

Ein Positionierermotor P, üblicherweise ein Schrittmotor, bewegt das Kopfsystem H radial über die Oberfläche der FlexyDisk und auf eine zur gewünschten Spur T, wobei der Kopf HD bzw. die Köpfe HD in Kontakt mit der Magnetschicht der FlexyDisk FD stehen.

Die Positionier-Steuerelektronik EP steuert den Positioniermotor P.

Das Signal STP bewirkt üblicherweise das Weiterpositionieren des Kopfsystems H um eine Spur T durch die Positionier-Steuerelektronik EP, wobei das Signal DIR die Richtung des Positioniervorgangs bestimmt.

Beide Signale liefert der Controller bzw. das Rechnersystem C. Das Signal T00 wird im Laufwerk D generiert, sobald sich das Kopfsystem H auf Spur T00 befindet und dient zur Normierung der Spurzählung.

Das Signal SEL aktiviert einen Schreib- oder Lesevorgang des Laufwerks D durch den Rechner C.

Das Signal R meldet dem Rechner C die Bereitschaft des Laufwerks D Befehle auszuführen.

Die Schaltung stellt den Fall dar, in dem normaler Schreib-Lesebetrieb am Rechner oder Controller C erfolgt.

Für die "Antiverschleiß"-Funktion werden folgende zusätzliche Einrichtungen benötigt:

1. Antiverschleiß-Steuerschaltung AB

2. Zeitgeber TIM

3. Umschalter S2.

1. Die Antiverschleiß-Steuerschaltung AB besteht aus einem Spurzähler SZ, der synchron zum Schrittmotor P läuft und immer die aktuelle Spur T angibt (er wird auch durch das Spur-Null-Signal T00 normiert, das durch den Spur-Null-Sensor S3 erzeugt wird), und aus einem Spurregister SR, das jeweils die Spurnummer speichert, auf der der Kopf HD während der Wartezeit TW steht oder stand. Die Schaltung AB liefert folgende Signale:

ein Umschalt-Signal US, das während der Antiverschleißzeit TA vorhanden ist,

Steuersignale A-DIR und A-STP, die die Richtung bzw. die Positionier-Schrittzahl der Weg- bzw. Rückpositionierungsbewegungsabläufe des Antiverschleißzyklus über die Positioniersteuer-Elektronik EP steuern.

Das Rückstell-Signal R, das nach Ablauf des Antiverschleißzyklus (Ausweichzyklus) den Zeitgeber TIM zurücksetzt und denselben wieder startet.

Angesteuert wird die Antiverschleiß-Steuerschaltung AB ihrerseits durch die folgenden Signale:

Startsignal ST vom Zeitgeber TIM, das dieser nach Ablauf der Wartezeit TW auslöst.

Schrittzahl- und Richtungssignale. Die Signale STP und DIR steuern den in der Steuerschaltung AB enthaltenen Spurzähler SZ an.

Die Signale STP und DIR müssen nicht unbedingt dem Controller oder Rechner C entnommen werden, sie können auch in der Antiverschleiß-Steuerschaltungerzeugt werden, z.B. mittels Mikroprozessors.

Das Auswahlsignal SEL des Controllers oder Rechners C dient als Sperrsignal für die AB-Steuerschaltung und verhindert so, daß während eines Schreib- und Lesevorganges ein Antiverschleißzyklus beginnen kann.

2. Der Zeitgeber TIM bestimmt die Wartezeit TW zwischen den Antiverschleißzyklen und liefert nach Ablauf den Startimpuls ST für die Antiverschleiß-SteuerschaltungAB. Zurückgesetzt und neu gestartet wird der Zeitgeber TIM durch das Rückstellsignal R entweder durch das Ende des Antiverschleißzyklus oder, wahlweise, auch durch einen STP-Impuls bei einem normalen Positioniervorgang, z.B. nach Zurückschaltung des Umschalters SZ in den Zustand des Blockschaltbildes.

3. Der Umschalter S2, hier als Relaisschalter dargestellt, schaltet mit Beginn und für die Dauer der Antiverschleiß-Operation die Eingänge der Positionier-Steuerelektronik vom Interface des Controllers oder Rechners C zur Antiverschleiß-Steuerschaltung AB um.

Gleichzeitig unterbricht der Umschalter S2 zweckmäßig das im Laufwerk D generierte Freisignal RY, um dem Rechner C dadurch zu melden, daß momentan keine Schreib- oder Leseoperation durchgeführt werden kann.

Der Umschalter S2 trennt zu Beginn des Antiverschleißzyklus die Positionier-Steuerschaltung vom Controller oder Rechner C und verbindet die Eingangsklemmen der Positionier-Steuerelektronik EP mit den Ausgangsklemmen AD und AS an denen die Steuersignale A-DIR und A-STP anliegen, mittels der die Weg- und Rückpositionierungsvorgänge während der Zeit TA gesteuert werden.

Die Dauer der Warte- und Antiverschleißzeiten TW bzw. TA werden natürlich in erster Linie durch die Einsatzbedingungen des jeweiligen Magnetspeichers bestimmt. Folgende Überlegungen können jedoch als Richtlinien dienen:

In einem praktischen Beispiel bei 80 Spuren und einer Positioniergeschwindigkeit von 3 ms pro Spur dauert das Positionieren von einer bestimmten Spur über die ganze Oberfläche und wieder zurück auf die Wartespur knapp 0,5 Sekunden, bei höheren Positioniergeschwindigkeiten entsprechend weniger.

Die Antiverschleißzeit TA liegt zweckmäßig etwa im Bereich von 0,2 bis 10 Sekunden.

Eine Wartezeit TW liegt je nach praktischer Anwendung der Magnet-Speichereinrichtung etwa zwischen

$$10 \text{ sec} \leq TW \leq 1 \text{ Std.}$$

Bei vorgenannten Werten liegt das Verhältnis

$$\frac{TA}{TW} \text{ zwischen } \frac{1}{50} \leq \frac{TA}{TW} \leq \frac{1}{360}$$

Dabei ist die Antiverschleißzeit TA relativ zur Wartezeit sehr klein, so daß die Betriebsbereitschaft kaum eingeschränkt wird.

Es ist natürlich ebenso möglich, bei Anwendung mit Zugriff in regelmäßigen Zeitabständen, einen periodischen Antiverschleißzyklus vorzusehen, der in seiner Zyklusdauer der Länge der regelmäßigen Zeitabstände angepaßt sein kann.

In praktischen Versuchen ergab sich eine nachweisliche Lebensdauererhöhung von Magnetköpfen und mit CoCr-Schicht versehener FlexyDisk um mindestens den Faktor 100 bis zum Faktor 1000.

Eine mit einer bestimmten Kohlenstoff-Schutzschicht versehene CoCr-Metallschicht erreichte ohne Anwendung des erfindungsgemäßen Verfahrens z.B. eine durchschnittliche Wartezeit von TW = 20 min (bis zur Zerstörung der Metallschicht in der Warte-Magnetspur).

Bei Anwendung der Erfindung konnte eine Nutz-Magnetspur etwa 500 Stunden jeweils 1 sec abgetastet werden, wenn jeweils zwischendurch ein Wegpositionieren auf die Innenspur und Rückpositionieren auf dieselbe Nutz-Magnetspur durchgeführt wurde

$$\frac{TA}{TW} \sim \frac{1}{10} \ .$$

Gemäß vorliegender Erfindung soll das Verhältnis TA/TW zwischen etwa 1/10 bis 1:400 oder weniger liegen.

Bei einem modernen FlexyDisk-Laufwerk mit Mikroprozessorsteuerung lassen sich die Aufgaben der einzelnen Funktionsgruppen praktisch ohne Geräte-Mehraufwand durch entsprechende Programmsteuerung realisieren.

**Patentansprüche**

1. Verfahren zur Vermeidung von auf Verschleiß zurückführbaren Abtastfehlern in einer Magnetspeichereinrichtung mit wenigstens einem Magnetkopf und mindestens einer Magnetplatte mit einer Magnetschicht, wobei Schreib- und Lesevorgänge in Kontakt von Magnetkopf und Magnetschicht in letzterer in einer oder mehreren Nutzspuren erfolgen, umfassend die Verfahrensschritte:

   Feststellen, ob der mindestens eine Magnetkopf auf eine oder mehrere Nutzspuren in Warteposition positioniert ist,

   Feststellen, wenn der mindestens eine Magnetkopf in Warteposition eine vorgegebene Wartezeit (TW) überschritten hat,

   Wegpositionieren des Magnetkopfes von der Nutzspur/den Nutzspuren gekennzeichnet durch Rückpositionieren des Magnetkopfes auf die Nutzspur(en) nach Ablauf einer vorgegebenen Antiverschleißzeit oder Ausweichzeit (TA), bei

   einem Verhältnis von Antiverschleißzeit (TA) zur Wartezeit (TW) zwischen etwa 1:10 und 1:400 oder kleiner.

**2.** Verfahren nach Anspruch 1, dadurch gekennzeichnet, daß das Wegpositionieren des Magnetkopfes auf einen anderen Bereich der Magnetschicht als den der Nutzspur(en) erfolgt.

**3.** Verfahren nach Anspruch 1 oder 2, dadurch gekennzeichnet, daß das Weg- und Rückpositionieren wenigstens eine Bewegung des Magnetkopfes über die gesamte Magnetschicht und zurück zur Nutzspur/zu den Nutzspuren umfaßt.

**4.** Verfahren nach Anspruch 1 oder 3, dadurch gekennzeichnet, daß das Wegpositionieren eine Bewegung des Magnetkopfes (HD) auf eine Nachbarspur/auf Nachbarspuren umfaßt.

**5.** Anordnung für ein Verfahren nach Anspruch 1 zur Vermeidung von auf Verschleiß zurückführbaren Abtastfehlern in einer Magnetspeichereinrichtung, die eine Steuerelektronik für den Magnetkopf-Positionierer enthält, gekennzeichnet durch

eine Antiverschleiß-Steuerschaltung (AB), im wesentlichen bestehend aus einem Spurzähler (SZ), der die aktuelle Spur (T) angibt, auf die der Magnetkopf (HD) positioniert ist, und einem Spurregister (SR) zur Speicherung der Nummer der aktuellen Spur (T),

durch einen Zeitgeber (TIM), der die Höchstlänge der Wartezeit (TW) bestimmt und kontrolliert und nach Ablauf der Wartezeit (TW) einen Startimpuls (ST) für die Antiverschleiß-Steuerschaltung (AB) liefert und dann zurückgesetzt und neu gestartet wird,

und durch einen Umschalter (S2), der, gesteuert durch ein Umschaltsignal (US), für die Dauer der Antiverschleißzeit (TA) die Positionierer-Steuerelektronik (EP) mit der Antiverschleiß-Steuerschaltung (AB) verbindet, so daß nur die Steuersignale (A-DIR, A-STP) aus der Antiverschleiß-Steuerschaltung (AB) die Weg- und Rückpositionierschritte des Magnetkopf-Positionierers (P) steuern,

und durch ein Verhältnis von Antiverschleißzeit (TA) zur Wartezeit (TW) zwischen etwa 1:10 und 1:400 oder kleiner.

**6.** Anordnung nach Anspruch 5, dadurch gekennzeichnet, daß der Umschalter (S2) ein Kennsignal (kein RY-Signal vorhanden) erzeugt, durch das ein Schreib-/Lesevorgang für die Dauer der Antiverschleißzeit (TA) verhindert wird.

**Claims**

**1.** A method for avoiding scanning errors, due to wear, in a magnetic storage means having at least one head and at least one magnetic disk possessing a magnetic layer, write and read operations taking place with contact between the head and the magnetic layer in one or more effective tracks in said magnetic layer, comprising the steps of:

determining whether the one or more heads are positioned on one or more effective tracks in the waiting position, determining if the one or more heads in the waiting position have exceeded a predetermined waiting time (TW), positioning the head away from the effective track(s), comprising positioning the head back on the effective track(s) after the elapse of a predetermined anti-wear or deflection time (TA), with a ratio of anti-wear time (TA) to waiting time (TW) of from about 1 : 10 to 1 : 400 or less.

**2.** A method as claimed in claim 1, wherein the head is positioned away to a region of the magnetic layer other than that of the effective track(s).

**3.** A method as claimed in claim 1 or 2, wherein positioning away and back comprises at least one movement of the head over the total magnetic layer and back to the effective track(s).

**4.** A method as claimed in claim 1 or 3, wherein positioning away comprises a movement of the head (HD) to an adjacent track/to adjacent tracks.

**5.** An arrangement for a method as claimed in claim 1 for avoiding scanning errors, due to wear, in a magnetic storage means which contains control electronics for the head positioner, which comprises

an anti-wear control circuit (AB), essentially consisting of a track counter (SZ) which indicates the current track (T) on which the head (HD) is positioned, and a track register (SR) for storing the number of the current track (T),

a timer (TIM) which determines and monitors the maximum length of the waiting time (TW) and, after the elapse of the waiting time (TW), gives a starting signal (ST) for the anti-wear control circuit (AB) and is then reset and restarted,

and a changeover switch (S2) which is controlled by a changeover signal (US) and connects the positioner control electronics (EP) to the anti-wear control circuit (AB) for the duration of the anti-wear time (TA) so that only the control signals (A-DIR, A-STP) from the anti-wear control circuit (AB) control the positioning away and positioning back steps of the head positioner (P), and wherein the ratio of anti-wear time (TA) to waiting time (TW) is from about 1 : 10 to 1 : 400 or less.

6. An arrangement as claimed in claim 5, wherein the changeover switch (S2) generates an identification signal (no RY signal present), by means of which a write/read operation is prevented for the duration of the anti-wear time (TA).

**Revendications**

1. Procédé pour éviter des erreurs d'exploration, imputables à l'usure, dans un dispositif magnétique de mémoire, à au moins une tête magnétique et au moins un disque magnétique à une couche magnétique, les processus d'écriture et de lecture s'effectuant en contact entre la tête magnétique et la couche magnétique, dans cette dernière dans une ou plusieurs pistes utiles, comprenant les étapes de procédé ci-après :
   - constatation si la (au moins une) tête magnétique est positionnée en position d'attente sur une ou plusieurs pistes utiles,
   - constatation si la (au moins une) tête magnétique a dépassé en position d'attente un temps d'attente (TW) prédéterminé,
   - écartement de la tête magnétique par rapport à la piste utile/aux pistes utiles,
   caractérisé par le ou les repositionnements de la tête magnétique sur la ou les pistes utiles, après écoulement d'un temps anti-usure ou temps d'écartement (TA) prédéterminé, avec un rapport entre le temps anti-usure (TA) et le temps d'attente (TW) compris entre à peu près 1:10 et 1:500 ou moins.

2. Procédé selon la revendication 1, caractérisé en ce que le positionnement en écartement de la tête magnétique s'effectue sur un autre zone de la couche magnétique que celle de la ou des pistes utiles.

3. Procédé selon la revendication 1 ou 2, caractérisé en ce que le positionnement en écartement et le repositionnement comprend au moins un déplacement de la tête magnétique sur l'ensemble de la couche magnétique et retour à la piste utile ou aux pistes utiles.

4. Procédé selon la revendication 1 ou 3, caractérisé en ce que le positionnement en écartement comprend un déplacement de la tête magnétique (HD) sur une piste voisine/sur des pistes voisines.

5. Dispositif pour un procédé selon la revendication 1, pour éviter des erreurs d'exploration imputables à l'usure, dans un dispositif magnétique de mémoire contenant une électronique de commande pour le positionneur de tête magnétique, caractérisé par
   un circuit de commande anti-usure (48), essentiellement composé d'un compteur de piste (SZ), indiquant la piste (T) en cours, sur laquelle la tête magnétique (HD) est positionnée, et un registre de piste (SR), pour stocker le numéro de la piste (T) en cours,
   un indicateur de temps (TIM), déterminant et contrôlant la longueur maximale du temps d'attente (TW) et envoyant après écoulement du temps d'attente (TW) une impulsion de départ (ST) pour le circuit de commande anti-usure (AB), puis étant remis à l'état initial et de nouveau démarré,
   et un commutateur (S2) qui, sous la commande d'un signal de commutation (US), relie pour la durée du temps anti-usure (TA) l'électronique de commande de positionneur (EP) au circuit de commande anti-usure (AB), de manière que seuls les signaux de commande (A-DIR, A-STP) provenant du circuit de commande anti-usure (AB) commandent les étapes de positionnement en écartement et de repositionnement du positionneur de tête magnétique (P),
   et par un rapport entre le temps anti-usure (TA) et le temps d'attente (TW) compris entre 1:10 et 1:400 ou moins.

6. Dispositif selon la revendication 5, caractérisé en ce que le commutateur (S2) produit un signal d'identification (il n'y a aucun signal RY), au moyen duquel tout processus d'écriture/lecture est

7

empêché pendant la durée du temps anti-usure (TA).

8

FIG.1

EP 0 366 000 B1